# EUROPÄISCHE PATENTSCHRIFT

(11) **EP 2 174 015 B1**
(45) Veröffentlichungstag und Bekanntmachung des Hinweises auf die Patenterteilung: **03.10.2012**
(21) Anmeldenummer: 08786329.6
(22) Anmeldetag: 22.07.2008
(51) Int. Cl.: F04D 19/04, F04D 29/66, F16C 27/06, F16C 35/077

(54) **PUMPEN-LAGERANORDNUNG**
PUMP BEARING ARRANGEMENT
SYSTEME DE PALIER DE POMPE

(30) Priorität: 10.08.2007 DE 102007037792
(43) Veröffentlichungstag der Anmeldung: 14.04.2010
(73) Patentinhaber: Oerlikon Leybold Vacuum GmbH, 50968 Köln (DE)
(72) Erfinder: HOELZER, Rainer, 50354 Hürth (DE); HENRY, Markus, 51109 Köln (DE); STOLLE, Robert, 41564 Kaarst (DE)
(74) Vertreter: von Kreisler Selting Werner
(86) Internationale Anmeldenummer: PCT/EP2008/059593
(87) Internationale Veröffentlichungsnummer: WO 2009/021809

(56) Entgegenhaltungen:
- EP-A- 0 196 352
- EP-A- 1 529 976
- EP-A- 1 760 319
- DE-A1- 2 144 307
- DE-U1- 8 910 040
- GB-A- 658 373
- GB-A- 2 415 019
- JP-A- 7 317 759
- P. JERSCHOW: "Silicone Elastomers, Vol. 12, Number 5" 2005, RAPRA REVIEW REPORTS , XP002519096 Seiten 25,26,52

## Beschreibung

Die Erfindung betrifft eine Pumpen-Lageranordnung, die insbesondere für schnelldrehende Pumpen, wie Turbomolekularpumpen geeignet ist.

Pumpen, wie Turbomolekularpumpen, weisen einen mit einer Rotorwelle verbundenen Pumpenrotor auf. Die Rotorwelle ist über zwei Lagereinrichtungen in einem Wellengehäuse gelagert. Die beiden Lagereinrichtungen weisen üblicherweise jeweils ein Kugellager auf. Die inneren Lagerringe bzw. Lagerschalen der beiden Kugellager sind fest mit der Rotorwelle verbunden. Die äußeren Lagerringe bzw. Lagerschalen sind in axialer Richtung mit dem Wellengehäuse verbunden bzw. liegen in axialer Richtung, beispielsweise an einem ringförmigen Ansatz an dem Wellengehäuse an. Die beiden Lagereinrichtungen sind axial vorgespannt. In radialer Richtung liegen die äußeren Lagerringe üblicherweise nicht unmittelbar an dem Wellengehäuse an. Vielmehr ist zwischen den äußeren Lagerringen und dem Wellengehäuse ein ringförmiger Spalt vorgesehen. In einer den äußeren Lagerring umgebenden kreisringförmigen in dem Wellengehäuse angeordneten Nut ist ein insbesondere als Schwingungselement zur Dämpfung dienender O-Ring angeordnet, durch den die beiden Lagereinrichtungen jeweils radial gehalten sind. Als Schwingungselement werden beispielsweise O-Ringe aus Silikon verwendet. Hierdurch entsteht jedoch das Problem, dass über O-Ringe aus Silikon nur eine geringe Wärmeableitung erfolgt.

Aus DE 8 910 040 ist es zur Verbesserung der Wärmeleitfähigkeit bekannt, dass Schwingungselement, wie den O-Ring, mit Metallpulver, insbesondere Kupferpulver zu füllen. Insbesondere O-Ringe mit Metall- bzw. Kupferanteilen verändern aufgrund der während des Betriebs auftretenden Kompressionen der Kupferelemente ihre mechanischen Eigenschaften. Hierdurch können die Dämpfungseigenschaften und die Lage der Lagereinrichtungen beeinträchtigt werden. Die Beimengung von Metall- oder Kupferpulver zu einem Elastomer bürgt ferner die Gefahr in sich, dass die Partikel nicht homogen verteilt sind. Dies führt zu Bereichen erhöhter Partikeldichte, sogenannten Nestern, sowie zu Bereichen geringerer Partikeldichte. Hieraus resultieren unvorhersehbare örtliche Schwankungen der Wärmeleitfähigkeit innerhalb des O-Rings. Hierdurch werden die elastischen Eigenschaften des Schwingungselements beeinflusst. Insbesondere in Bereichen erhöhter Partikeldichte verändert sich die Steifigkeit bzw. die Elastizität des Schwingungselements. Pumpen-Lageranordnungen, insbesondere schnell drehender Pumpen, wie Turbomolekularpumpen sind einer dauerhaften Schwingungsbanspruchung ausgesetzt. Hierbei können Frequenzen von 1,5 kHz auftreten. Dies kann zu einer Entmischung bzw. einer Trennung der Metall- bzw. Kupferpartikel in dem O-Ring führen. Hierdurch tritt in dem Schwingungselement eine interne Festkörperreibung und somit eine erhebliche Temperaturerhöhung auf. Bei einer derartigen Entmischung bzw. Trennung der Partikel an der Oberfläche des Schwingungselements können die Partikel aus dem Schwingungselement austreten und in das Lager eindringen. Hierdurch wird die Lebensdauer des Lagers verringert. Durch das Trennen bzw. Entmischen verändern sich ferner die Schwingungseigenschaften und es treten lokale thermische Überlastungen des Materials auf. Dies kann zur vollständigen Zerstörung oder zur plastischen Verformung des Schwingungselements führen.

Insbesondere bei Rotoren von Pumpen-Lageranordnungen, die für schnell rotierende Bauteile, wie Turbomolekularpumpen, eingesetzt werden, besteht die Problematik, dass auf Grund der in den Lagern auftretenden Reibung eine starke Erwärmung der Lagereinrichtungen auftritt. Die bei derartigen schnell rotierenden Bauteilen auftretenden Temperaturen können durch bekannte Schwingungselemente, wie O-Ringe aus Silikon oder O-Ringe mit Kupferanteilen, nicht ausreichend abgeführt werden. Dies ist insbesondere bei Pumpen-Lageranordnungen für schnelldrehende Turbomolekularpumpen der Fall, die typischerweise in Abhängigkeit des Rotordurchmessers eine Rotordrehzahl von 500 Hz - 1.500 Hz aufweisen.

Eine Wärmeabfuhr aus dem Lager ist insbesondere schwierig, da die axialen Flächen der verwendeten Kugellager, bei denen es sich insbesondere um Schrägkugellager handelt, klein sind und daher nur wenig zur Wärmeabfuhr beitragen. In radialer Richtung weisen die äußeren Lagerringe üblicherweise einen Abstand zum Wellengehäuse auf, um die axiale Vorspannung realisieren zu können. Somit ist die Wärmeabfuhr in radialer Richtung nicht ausreichend gegeben. Insbesondere da die Lager bei kleinen Drücken von üblicherweise 1 x 10⁻³ bis 10⁻¹⁰ mbar betrieben werden, ist die Wärmeleitung in radialer Richtung äußerst gering.

Aufgabe der Erfindung ist es, eine Pumpen-Lageranordnung, die insbesondere für schnelldrehende Pumpen geeignet ist, zu schaffen, bei der die Wärmeabfuhr verbessert ist.

Die Lösung der Aufgabe erfolgt erfindungsgemäß durch die Merkmale des Anspruchs 1.

Erfindungsgemäß ist das zur Dämpfung dienende Schwingungselement derart ausgebildet und/oder angeordnet, dass es seine Wärmeleitfähigkeit von mindestens 0,3 W/(mk) aufweist. Hierbei ist das Schwingungselement zwischen dem Lagerring und dem Wellengehäuse angeordnet. Vorzugsweise umgibt das Schwingungselement den äußeren Lagerring und ist somit zwischen dem äußeren Lagerring und dem Wellengehäuse angeordnet. Erfindungsgemäß erfüllt das Schwingungselement somit zwei Aufgaben, einerseits die Dämpfung von Bewegungen des Lagerrings und anderseits die Wärmeableitung von dem Lagerring insbesondere in das Wellengehäuse. Durch diese erfindungsgemäße Doppelfunktion des Schwingungselements kann eine gute Wärmeabfuhr aus dem Lager realisiert werden. Hierdurch ist die Lebensdauer des Lagers verlängert.

Erfindungsgemäß wird ein quasi-homogenes Material für das mindestens eine Schwingungselement verwendet. Hierbei wird die erfindungsgemäße Wärmeleitefähigkeit des Materials nicht durch Partikel-Beimengungen, wie Metall- bzw. Kupferpulver, sondern durch das Elastomermaterial selbst gewährleistet. Die Eigenschaften des Materials werden hierbei insbesondere durch die Länge und die Gliederung der Makromoleküle beeinflusst. Bevorzugt ist hierbei, dass ein Material ausgewählt wird, bei welchem die Schwingungs- und Wärmeleitfähigkeitseigenschaften in alle Raumrichtungen im Wesentlichen identisch sind, und insbesondere auch bei hohen Temperatureinflüssen und Temperaturschwankungen, insbesondere im Bereich von 4°C bis 120°C, keine Trennung des Materials erfolgt. Auch wenn bei Pumpen, insbesondere schnell drehenden Pumpen, wie Turbomolekularpumpen hohe Schwingungsbeanspruchungen von bis zu 1,5 kHz auftreten, bleibt das vorzugsweise erfindungsgemäß verwendete Material elastisch. Insbesondere ist das Material bei den in diesem Einsatzbereich üblicherweise auftretenden Frequenzen, insbesondere im Bereich von 1Hz bis 4kHz, dauerschwingungsfest, so das keine Änderung der Materialeigenschaften auftreten.

Erfindungsgemäβ weist das verwendete Material Silikonkautschukmasse auf und das Schwingusgselement eine Shore A Härte von 40 - 80 Shore A.

Besonders bevorzugt ist es, dass das mindestens eine Schwingungselement eine Wärmeleitfähigkeit von mindestens 0,35 W/(mk), und besonders bevorzugt mindestens 0,4 W/(mk) aufweist.

Das Schwingungselement weist ein elastomeres Material auf oder ist aus elastomerem Material ausgebildet. Versuche haben gezeigt, dass der Werkstoff Elastosil R840 besonders gut zur Verwirklichung der Erfindung geeignet ist.

Insbesondere können je Lagereinrichtung mehrere Schwingungselemente vorgesehen sein. Vorzugsweise sind zwei den äußeren Lagerring zur Aufnahme von radialen Kräften umgebende ringförmige Schwingungselemente vorgesehen. Ferner können zur axialen Dämpfung auch in axialer Richtung Schwingungselemente, die vorzugsweise ebenfalls ringförmig ausgebildet sind, vorgesehen sein.

Die im Querschnitt vorzugsweise rechteckig oder kreisrund ausgebildeten Schwingungselemente sind in bevorzugter Ausführungsform jeweils in einer Nut angeordnet. Die Nut ist vorzugsweise in dem Wellengehäuse vorgesehen, wobei das Schwingungselement über die Nut vorzugsweise vorsteht, so dass zwischen dem Wellengehäuse und dem Lagerring stets ein Spalt ausgebildet ist.

Ferner betrifft die Erfindung die Verwendung eines Schwingungselements mit einer Wärmeleitfähigkeit von mindestens 0,3 W/(mK) bei Pumpen-Lagerungen. Das Schwingungselement ist hierbei vorzugsweise wie vorstehend beschrieben weitergebildet.

Nachfolgend wird die Erfindung anhand einer bevorzugten Ausführungsform unter Bezugnahme auf die anliegende Zeichnung näher erläutert.

Die Fig. zeigt eine schematische Schnittansicht einer oberen bzw. rotorseitigen erfindungsgemäßen Lagereinrichtung.

Eine bevorzugte Ausführungsform der oberen bzw. einem Rotor 10 zugewandten Lagereinrichtung 12 ist in der Fig. dargestellt. Der Rotor 10 ist drehfest mit einer Rotorwelle 14 verbunden. Auf der Rotorwelle 14 ist drehfest eine innere Lagerschale 16 eines Rillenkugellagers angeordnet, die durch den Rotor und den Wellenansatz 18 positioniert wird.

Die obere Lagereinrichtung 12 ist in einem Wellengehäuse 20 angeordnet, das im dargestellten Ausführungsbeispiel im Wesentlichen zylindrisch ausgebildet ist. Ein äußerer Lagerring 22 ist innerhalb des Wellengehäuses 20 angeordnet. Zwischen den beiden Lagerringen 16, 22 sind Lagerkörper 24 in Form von Kugeln angeordnet.

Der äußere Lagerring 22 ist im ersten Ausführungsbeispiel durch zwei radiale Schwingungselemente 26, bei denen es sich um elastische O-Ringe handelt, mit dem Wellengehäuse 20 verbunden. Ferner ist ein vorzugsweise ebenfalls als elastischer O-Ring ausgebildetes axiales Schwingungselement 28 vorgesehen. Die beiden radialen Schwingungselemente 26 sind jeweils in einem Randbereich des äußeren Lagerrings 22 jeweils in einer Nut 30 angeordnet. Die Nut 30 ist in dem Wellengehäuse 20 vorgesehen. Die Tiefe der Nut 30 ist geringer als der Durchmesser der O-Ringe 26, so dass diese über eine Innenseite 32 des Wellengehäuses 20 vorstehen und an dem äußeren Lagerring 22 anliegen.

Das axiale Schwingungselement 28 ist in einer axialen ringförmigen Nut 34 angeordnet, die ebenfalls im Wellengehäuse 20 vorgesehen ist. Die Tiefe der Nut 34 ist wiederum geringer als der Durchmesser des O-Rings 28, so dass dieser in Richtung des äußeren Lagerrings 22 vorsteht. Zwischen dem axialen Schwingungselement 28 und dem äußeren Lagerring 22 ist ein Kraftübertragungselement 36 vorgesehen. Das Kraftübertragungselement 36 hat insbesondere die Funktion eines Reibungsdämpfers. Ferner hat das Kraftübertragungselement 36 die Funktion, dass der äußere Lagerring 22 in radialer Richtung bewegbar ist, ohne dass auf das axiale Schwingungselement 28 Scheerkräfte bzw. Radialkräfte wirken. Zumindest können die entsprechend auftretenden Kräfte deutlich reduziert werden.

Zwischen den beiden radialen Schwingungselementen 26 ist eine Entlüftungsbohrung 38 in Form einer Querbohrung vorgesehen sein.

Die in dem dargestellten Ausführungsbeispiel vorgesehenen ringförmigen Schwingungselemente 26, 28 dienen zur Wärmeabfuhr aus der Lagereinrichtung 12. Die insbesondere durch Rollreibung der Kugeln 24 erzeugte Wärme wird somit über den äußeren Lagerring 22 sowie die Schwingungselemente 26, 28 in das Wellengehäuse 20 abgeleitet. Hierzu weisen die Schwingungselemente 26, 28 eine gute Wärmeleitfähigkeit von insbesondere über 0,3 W/(mK) auf.

Zusätzlich zu der dargestellten oberen Lagereinrichtung 12 ist das untere Ende der Rotorwelle 14 durch ein weiteres Kugellager gelagert. Die beiden Lager sind zur axialen Vorspannung in Längsrichtung der Rotorwelle 14 verspannt.

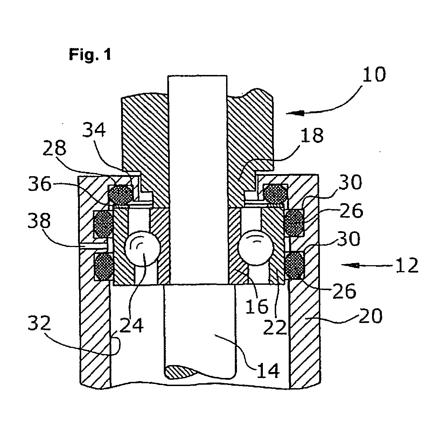

## Patentansprüche

1. Pumpen-Lageranordnung, insbesondere für schnelldrehende Pumpen, wie Turbomolekularpumpen, mit
einer mit einem Pumpenrotor (10) Verbindbaren Rotorwelle (14) und
einem Wellengehäuse (20), in dem die Rotorwelle (14) über zwei in der Pumpen-Lageranordnung angeordneten Lagereinrichtungen (12) drehbar gelagert ist,
wobei jede Lagereinrichtung (12) einen inneren Lagerring (16), einen äußeren Lagerring (22) und dazwischen angeordnete Lagerkörper (24) aufweist, und
einem am Lagerring (22) und dem Wellengehäuse (20) bzw. der Rotorwelle (14) anliegendem Schwingungselement (26, 28) zur Dämpfung, wobei das Schwingungselement (26, 28) zusätzlich zur Wärmeabfuhr dient und eine Wärmeleitfähigkeit von mindestens 0,3 W/mK aufweist,
wobei das Schwingungselement (26, 28) Silikon aufweist, frei von Metallpartikeln ist und eine Shore A Härte von 40 - 85 Shore A aufweist.

2. Pumpen-Lageranordnung nach Anspruch 1, **dadurch gekennzeichnet, dass** die Wärmeleitfähigkeit der Schwingungselemente (26, 28) größer als 0,35 W/mK, insbesondere größer als 0,4 W/mK ist.

3. Pumpen-Lageranordnung nach Anspruch 1 oder 2, **dadurch gekennzeichnet, dass** die Schwingungselement (26, 28) ein elastomeres Material aufweisen.

4. Pumpen-Lageranordnung nach einem der Ansprüche 1 - 3, **dadurch gekennzeichnet, dass** zwischen dem äußeren Lagerring (22) und dem Wellengehäuse (20) ein Spalt ausgebildet ist.

5. Pumpen-Lageranordnung nach einem der Ansprüche 1 - 4, **dadurch gekennzeichnet, dass** das Schwingungselement (26, 28) ringförmig ausgebildet ist.

6. Pumpen-Lageranordnung nach einem der Ansprüche 1 - 5, **dadurch gekennzeichnet, dass** das Schwingungselement (26, 28) einen rechteckigen oder kreisrunden Querschnitt aufweist.

7. Pumpen-Lageranordnung nach einem der Ansprüche 1 - 6, **dadurch gekennzeichnet, dass** das Schwingungselement (26) den äußeren Lagerring (22) zur Dämpfung von Radialbewegungen insbesondere vollständig umgibt.

8. Pumpen-Lageranordnung nach einem der Ansprüche 1 - 7 **dadurch gekennzeichnet, dass** das Schwingungselement (26, 28) in einer im Wellengehäuse (20) vorgesehenen Nut (30, 34) angeordnet ist.

9. Pumpen-Lageranordnung nach einem der Ansprüche 1 - 8, **dadurch gekennzeichnet, dass** mehrere Schwingungselemente (26, 28) vorgesehen sind.

10. Verwendung eines Schwingungselements (26, 28) in einer Pumpen-Lageranordnung nach einem der Ansprüche 1 bis 9.

## Claims

1. A pump bearing arrangement, particularly for rapidly rotating pumps such e.g. as turbomolecular pumps, comprising
a rotor shaft (14) connectible to a pump rotor (10), and
a shaft housing (20) with the rotor shaft (14) supported therein via two bearing devices (12) disposed in the pump bearing arrangement,
each bearing device (12) comprising an inner bearing ring (16), an outer bearing ring (22) and bearing supports (24) arranged between said bearing rings, and
a vibration element (26,28) for damping, arranged in abutment on the bearing ring (22) and the shaft housing (20) and respectively the rotor shaft (14), said vibration element (26,28) additionally serving for heat dissipation and having a thermal conductivity of at least 0.3 W/mK,
said vibration element (26,28) comprising silicone, is free of metal particles and has a Shore A hardness of 40 - 85 Shore A.

2. The pump bearing arrangement according to claim 1, **characterized in that** the thermal conductivity of the vibration elements (26,28) is higher than 0.35 W/mK, preferably higher than 0.4 W/mK.

3. The pump bearing arrangement according to claim 1 or 2, **characterized in that** the vibration element (26,28) comprises an elastomeric material.

4. The pump bearing arrangement according to any one of claims 1 - 3, **characterized in that** a gap is formed between the outer bearing ring (22) and the shaft housing (20).

5. The pump bearing arrangement according to any one of claims 1 - 4, **characterized in that** the vibration element (26,28) has an annular shape.

6. The pump bearing arrangement according to any one of claims 1 - 5, **characterized in that** the vibration element (26,28) has a rectangular or circular cross section.

7. The pump bearing arrangement according to any one of claims 1 - 6, **characterized in that**, for damping radial movements, the vibration element (26) surrounds the outer bearing ring (22), preferably all around the bearing ring.

8. The pump bearing arrangement according to any one of claims 1 - 7, **characterized in that** the vibration element (26,28) is arranged in a groove (30,34) provided in the shaft housing (20).

9. The pump bearing arrangement according to any one of claims 1 - 8, **characterized in that** a plurality of vibration elements (26,28) are provided.

10. Use of a vibration element (26,28) in a pump bearing arrangement according to any one of claims 1 - 9.

## Revendications

1. Configuration de palier de pompe, en particulier pour pompes à grande vitesse, telles que les pompes turbomoléculaires, comprenant
un arbre de rotor (14) pouvant être relié à un rotor de pompe (10) et
un carter d'arbre (20) dans lequel l'arbre de rotor (14) est monté rotatif par l'intermédiaire de deux structures de palier (12) agencées dans la configuration de palier de pompe,
dans lequel chaque structure de palier (12) présente une bague de palier intérieure (16), une bague de palier extérieure (22) et des corps de palier (24) disposés entre ces bagues, et
un élément d'oscillation (26, 28) adjacent à la bague de palier (22) et au carter d'arbre (20) ou à l'arbre de rotor (14) et servant à l'amortissement, l'élément d'oscillation (26, 28), servant en outre à la dissipation de la chaleur et présentant une conductibilité thermique d'au moins 0,3 W/mK,
l'élément d'oscillation (26, 28) comprenant du silicone, étant exempt de particules métalliques et possédant une dureté Shore de 40 - 85 Shore A.

2. Configuration de palier de pompe selon la revendication 1, **caractérisée en ce que** la conductibilité thermique des éléments d'oscillation (26, 28) est supérieure à 0,35 W/mK, en particulier supérieure à 0,4 W/mK.

3. Configuration de palier selon la revendication 1 ou 2, **caractérisée en ce que** les éléments d'oscillation (26, 28) présentent une matière élastomère.

4. Configuration de palier de pompe selon l'une des revendications 1 à 3, **caractérisée en ce qu'**une fente est formée entre la bague de palier extérieure (22) et le carter d'arbre (20).

5. Configuration de palier de pompe selon l'une des revendications 1 à 4, **caractérisée en ce que** l'élément d'oscillation (26, 28) est de forme annulaire.

6. Configuration de palier de pompe selon l'une des revendications 1 à 5, **caractérisée en ce que** l'élément d'oscillation (26, 28) présente une section rectangulaire ou circulaire.

7. Configuration de palier de pompe selon l'une des revendications 1 à 6, **caractérisée en ce que** l'élément d'oscillation (26) entoure, en particulier entièrement, la bague de palier extérieure (22) pour assurer l'amortissement des mouvements radiaux.

8. Configuration de palier de pompe selon l'une des revendications 1 à 7, **caractérisée en ce que** l'élément d'oscillation (26, 28) est disposé dans une gorge (30, 34) prévue dans le carter d'arbre (20).

9. Configuration de palier de pompe selon l'une des revendications 1 à 8, **caractérisée en ce qu'**il est prévu plusieurs éléments d'oscillation (26,28).

10. Utilisation d'un élément d'oscillation (26, 28) dans une configuration de palier de pompe selon l'une des revendications 1 à 9.
